# EUROPEAN PATENT SPECIFICATION

(11) **EP 1 842 760 B1**
(45) Date of publication and mention of the grant of the patent: **01.12.2010**
(21) Application number: 07006958.8
(22) Date of filing: 03.04.2007
(51) Int. Cl.: B62B 7/08, B62B 9/26

(54) **Collapsible stroller frame**
Zusammenklappbarer Kinderwagenrahmen
Cadre de poussette pliable

(30) Priority: 06.04.2006 CN 200620057563 U
(43) Date of publication of application: 10.10.2007
(73) Proprietor: Lerado (Zhong Shan) Industrial Co., Ltd., Zhong Shan City Guangdong (CN)
(72) Inventor: Yang, Cheng-Fan, Xue-Jia Tainan Hsien (TW); Hou, Hung-Chung, Taibao City Chiayi County 612 (TW); Jiang, Sen-Yung, Dounan Township Yunlin County 630 (TW)
(74) Representative: Wagner, Bernhard Peter

(56) References cited:
- EP-A- 1 700 768
- FR-A- 2 888 552
- GB-A- 1 507 775
- GB-A- 2 107 653
- GB-A- 2 186 793

## Description

The present invention relates to a stroller frame, and more particularly to a stroller frame which can be converted between an expanded deployed configuration and a folded or collapsed configuration.

Conventional strollers have a configuration using sets of link rods which are pivotally connected to each other. A release device is arranged to control a hinge having a latch which can be locked or released so as to deploy the stroller in an expanded configuration or folded into a collapsed configuration. An example of such a stroller is described in US Patent No. 5772235. However, the link rod arrangements of conventional stroller frames are very complicated and difficult to operate.
GB 2 186 793 A discloses a collapsable stroller frame having a front support including a handle portion and a leg portion wherein a lower end of the leg portion is provided with a front wheel set. A rear support is pivoted with its upper end to a slider mounted to the upper end of the leg portion of the front support. The lower end of the rear support is provided with a rear wheel set. A sliding sleeve is carried by the lower end of the handle portion and slidably mounted on the leg portion. To improve the rigidity of the rear support a supplementary rear transverse member interconnects the two lateral semi-chassis of the rear support in addition to a back lower transverse member. A connecting rod is pivoted with one end to the rear support. The other end of the connecting rod is articulated to the lower extremity of the handle portion. A link rod is connected with both the connecting rod and the sliding sleeve.
For folding the stroller frame the handle portion and the leg portion of the front support are axially collapsed by sliding the sliding sleeves and along the respective parts of the front support. The connecting rod and the link rod pulling the rear support to fold them back against the front support.
GB 2 107 653 A is concerned with a stroller frame having a reversible handle. Thus, known stroller frame comprises a handle, a front leg portion provided with front wheels at its lower end and a rear support provided with a rear wheel set at its lower end. The upper end of the rear support is pivotally connected to an upper part of the front leg portion. Two parallel transverse connecting rods are provided on each side of the stroller frame. Each of which is connected to the respective front leg portion by a pivot pin. The front end of the connecting rods is pivoted to the bar link the other end of which is pivoted to a front leg slider. The rear ends of the connecting rods are connected to respective support angle bars by pivot pins. The support angle bars are respectively pivoted to the rear legs by pivot pins.
For folding the stroller frame, the handle portion is brought in its lower position with regard to the rear leg portion so that the transverse connecting rods are turned such that their front ends are upwardly directed whereas the rear end is moved downwardly so that the front leg portion and the rear leg portion are drawn close to each other.
The object underlying the present invention is to provide another improved collapsable stroller frame having a simple structure and being easily to operate. This object is achieved by the collapsable stroller frame according to claim 1. Refinements and advantageous developments of the present invention are described in the depending claims.

Thus, when the frame is in its expanded or deployed configuration, the sliding sleeve is engaged with the front support. The stroller frame can be folded by folding the front and rear carrier parts towards each other when the sliding sleeve is disengaged from the front support. This achieves the goal of easy operation.

The accompanying drawings, which are incorporated in and constitute a part of this specification, illustrate several embodiments of the invention and, together with the description, serve to explain the principles of the invention.

Fig. 1 is a perspective view of a frame constructed according to the present invention in its deployed configuration.

Fig. 2 is a partial enlarged schematic view of a sliding sleeve of the frame shown in Fig. 1.

Fig. 3 is an elevational side view of the frame shown in Fig 1.

Fig. 4 is a partial enlarged schematic view of a sliding sleeve securing arrangement which may be used as an alternative to that shown in Fig. 2.

Fig. 5 is a schematic view showing an alternative means of interconnecting front and rear portions of the foldable carrier of the frame shown in Fig. 1.

Fig. 6 is a partial schematic side view of the frame shown in Fig. 1 in a partially collapsed configuration.

Fig. 7 is a schematic side view of the frame shown in Fig. 1 in a fully collapsed configuration.

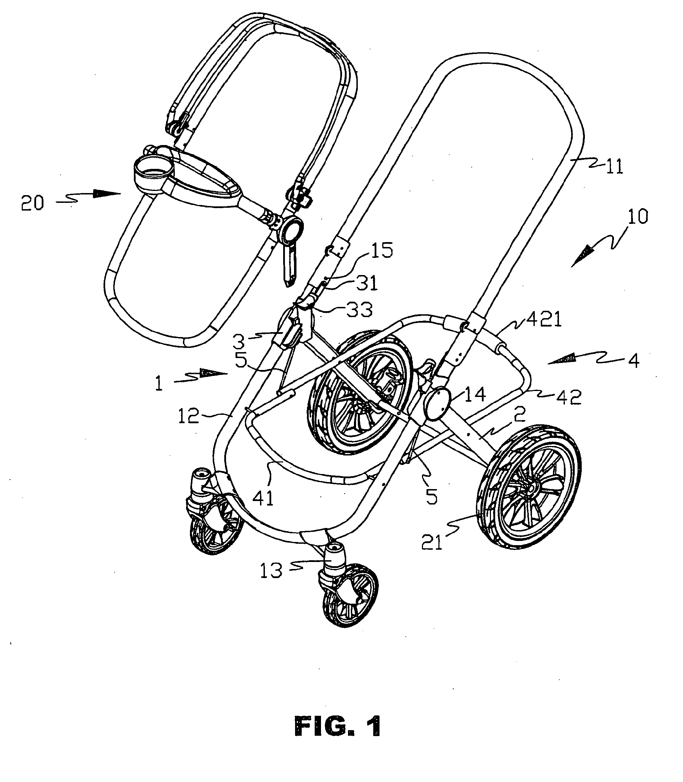

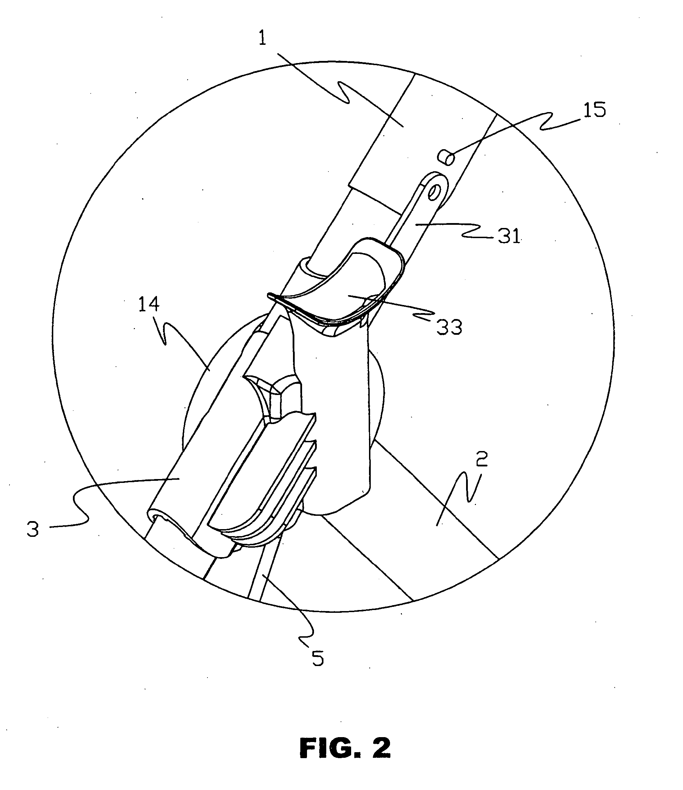

Referring to Figs. 1 and 2, a stroller includes a frame 10 which can either be collapsed or deployed and is provided with a seat 20 for accommodating a child. The frame 10 includes a front support 1, a rear support 2, a sliding sleeve 3, a foldable support 4 and a link rod 5.

The front support comprises a handle portion 11 and a leg portion 12, wherein the handle portion 11 is used for pushing by a user for moving the stroller. The leg portion 12 may be arranged to be a straight line extension of the handle portion 11, and a lower end of the leg portion 11 is connected with a front wheel set 13. The handle portion 11 can be made as one-piece with the leg portion 12.

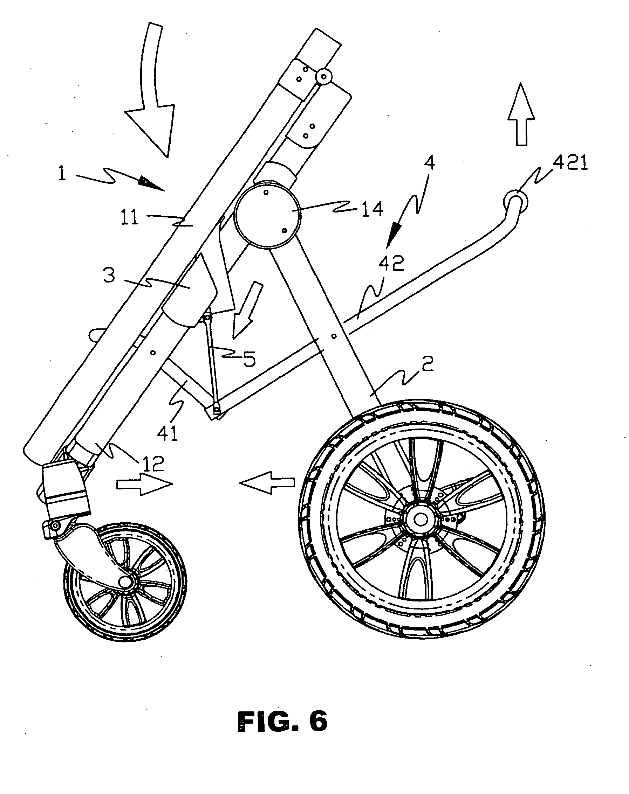

In the embodiment of the collapsible stroller frame of the present invention, the handle portion 11 is pivotally connected to the leg portion 12 and each portion has a U-shaped configuration. A closed oval-like shape is formed by the handle and leg portions when the frame 10 is in its deployed configuration. As shown in Fig. 6, the handle portion 11 is folded downwardly to the leg portion 12 when the frame 10 is collapsed, so as to reduce the overall size of the frame 10. One skilled in the art could make some simple changes such as making the handle portion 11 expandable and contractable (not shown) and the handle portion 11 could be positioned inside or outside the leg portion 12 so that the height could be so adjusted and the size of the frame be reduced after collapsing has occurred. Preferably, the leg portion 12 is fixed in place by a connecting device 14.

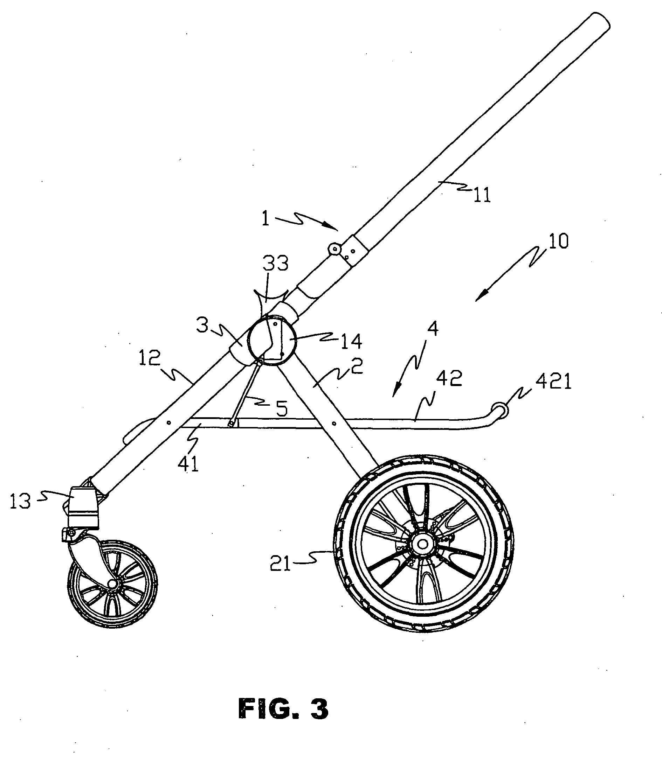

As shown in Fig. 3, an upper end of each rear support 2 is pivotally connected to one of the connecting devices 14 and a lower end thereof is connected to a rear wheel set 21. The sliding sleeve 3 is moveably mounted on the leg portion 12. Preferably, the sliding sleeve 3 is designed to releasably lock the frame 10 so as to fix the frame 10 after it has been deployed.

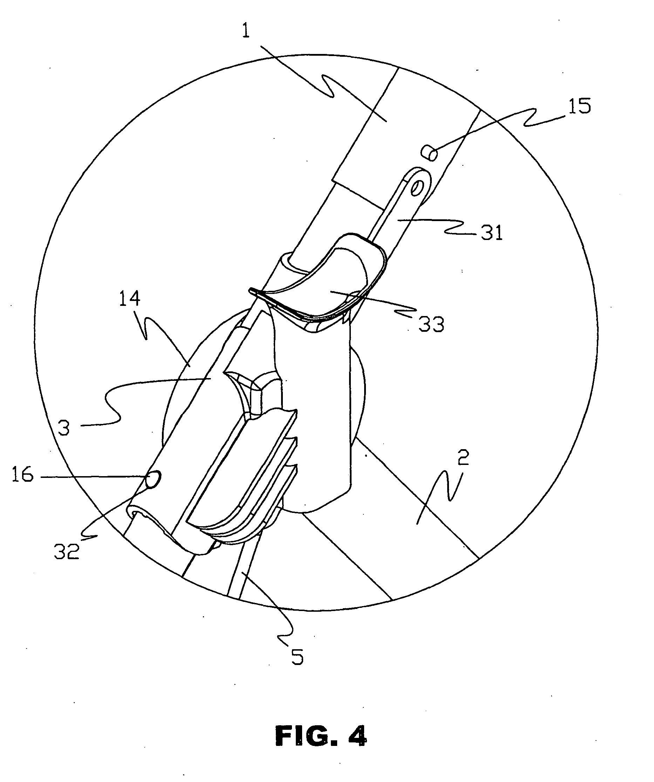

Referring again to Fig. 2, the sliding sleeve 3 has an elastic positioning piece 31 extending therefrom which can be used to engage a positioning projection 15 disposed on the front support 1. One skilled in the art would be able to suggest alternatives for locking the sliding sleeve 3 relative to the frame 10. For example, the sliding sleeve 3 could be locked to the connecting device 14 (not shown). Another variation is shown in Fig. 4, in which a positioning hole 32 is located in the sliding sleeve 3 and locked with a resilient projection 16 extending from the leg portion 12. It will be clear to a person skilled in the art that such locking methods are well known and the invention is not limited to any specific locking mechanism. In the preferred embodiment, a socket 33 is disposed on the sliding sleeve 3 for supporting the seat 20. When folding the frame 10, the seat 20 is first moved together with the sliding sleeve 3 and the frame is then folded.

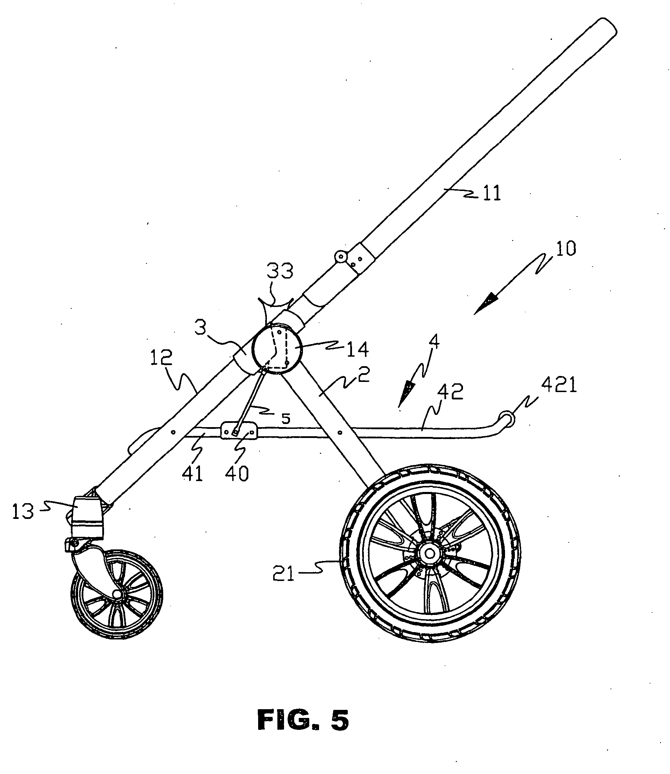

Fig. 5 shows the foldable carrier 4 which is pivotally connected between the front support 1 and the rear support 2 and includes a front carrier part 41 and a rear carrier part 42, both of which may be tubular. The front carrier part 41 is pivotally connected to the front support 1 and the rear carrier part 42 is pivotally connected to the rear support 2. Ends of the front carrier part 41 and rear carrier part 42 are coupled to each other. Preferably, they are interconnected by a pivoting base 40 as shown in Fig. 5. Preferably a hand grip 421 is positioned at a rear end of the rear carrier part 42 to facilitate pulling of the frame 10 when it is collapsed configuration.

A link rod 5 is connected on each side between the sliding sleeve 3 and the foldable support 4. In the preferred embodiment of the invention, one end of each link rod 5 is pivotally connected to the front carrier part 41 and the rear carrier part 42 at their interconnecting pivot point (Figs. 3 and 6) . Alternatively, each link rod 5 is connected to one of the pivoting bases 40 as shown in Fig. 5.

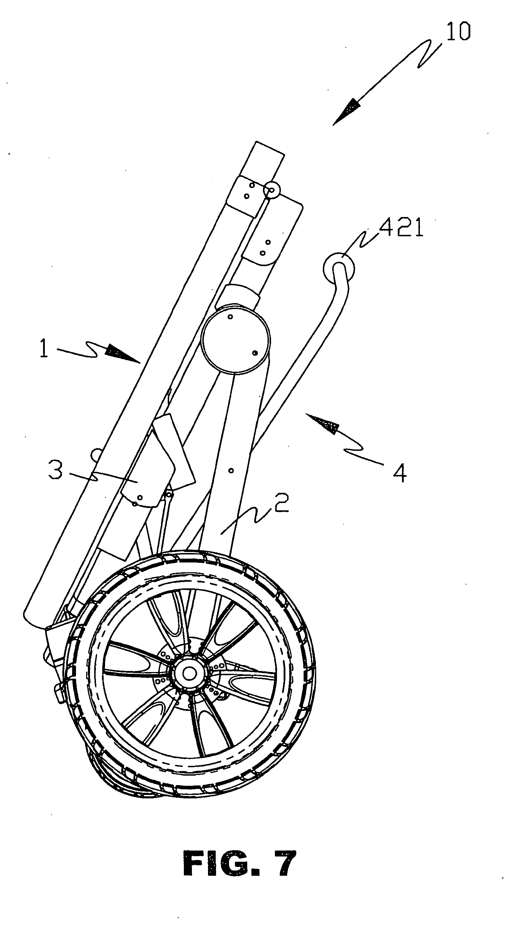

Referring to Figs. 2 and 5, when the frame 10 is deployed, each sliding sleeve 3 is locked relative to the leg portion 12, and the front carrier part 41 and the rear carrier part 42 are approximately positioned in a horizontal plane. Further referring to Figs. 2, 6 and 7, when the user intends to fold the frame 10, the sliding sleeve 3 is released from the frame 10 by disengaging the positioning piece 31 from the positioning projection 15. At the same time, the user pulls up and rotates the hand grip 421 of the rear carrier part 42 thereby forcing the sliding sleeve 3 to move down along the leg portion 12. As this occurs, each link rod 5 is forced downwardly so that the front carrier part 41 and rear carrier part 42 are folded and adopt a V-shaped configuration as shown in Fig. 6. The front support 1 and rear support 2 are then easily drawn close to each other in a folded configuration as shown in Fig. 7.

## Claims

1. A collapsible stroller frame comprising:
a front support (1), including a handle portion (11) and a leg portion (12), wherein a lower end of the leg portion (12) is provided with a front wheel set (13);
a rear support (2), having an upper end pivoted to the front support (1) and a lower end provided with a rear wheel set (21);
a sliding sleeve (3), moveably mounted on the front support (1) and having a locked position;
a foldable carrier (4) including a front carrier part (41) and a rear carrier part (42) pivoted to each other between the leg portion (12) of the front support (1) and the rear support (2); the front carrier part (41) being pivotally connected to the front support (1) and the rear carrier part (42) being pivotally connected to the rear support (2); and
a link rod (5), connected between the sliding sleeve (3) and the foldable carrier (4),
the frame being arranged such that upon folding the frame, the foldable carrier (4) is folded by releasing the sliding sleeve (3) from the front support (1) so that the sliding sleeve (3) and the link rod (5) slide downwardly along the front support (1) thus folding the front carrier part (41) and the rear carrier part (42) into a V-shaped configuration and the front support (1) and the rear support (2) are drawn close to each other in a folded configuration.

2. The collapsible stroller frame of claim 1 wherein the sliding sleeve (3) is provided with a socket (33) for positioning a seat so as to allow the seat to move along with the sliding sleeve upon folding of the frame.

3. The collapsible stroller frame of claim 1 or 2, wherein the handle portion (11) and the leg portion (12) are each made in one piece.

4. The collapsible stroller frame of any preceding claims configured such that the handle portion is pivotally connected to the leg portion (12) so as to be able to be rotated towards the leg portion (12) upon folding of the frame.

5. The collapsible stroller frame of any one of claims 1 to 3, wherein the handle portion (11) is configured to be extendible or retractable by sliding inside the leg portion (12).

6. The collapsible stroller frame of any preceding claims, wherein the handle portion (11) and the leg portion (12) are configured so as to define a closed oval-like shape.

7. The collapsible stroller frame of any preceding claims, wherein ends of the front carrier part (41) are pivotally connected to ends of the rear carrier part (42).

8. The collapsible stroller frame of claim 7 wherein one end of the link rod (5) is pivotally connected to a pivot interconnecting the front carrier part (41) and the rear carrier part (42).

9. The collapsible stroller frame of claim 7 wherein each end of the front carrier part (41) is respectively pivotally connected to a respective end of the rear carrier part (42) by a pivoting base (40) to which one end of one said link rod (5) is pivoted.

10. The collapsible stroller frame of claim 1, wherein the sliding sleeve (3) and the front support (1) include means for locking them relative to each other.

11. The collapsible stroller frame of claim 10, wherein the sliding sleeve (3) includes a positioning piece (31) extending therefrom.

12. The collapsible stroller frame of claim 11, wherein the leg portion (12) includes a positioning projection (15) with which the positioning piece (31) is lockable.

13. The collapsible stroller frame of any one of claims 1 to 10, wherein the sliding sleeve (3) has a positioning hole (32) which is lockable with a resilient projection (16) extending from the leg portion (12).

14. The collapsible stroller frame of claim 1, wherein the front support (1) has a connecting device (14) for pivotally connecting it to the rear support (2).

15. The collapsible stroller frame of claim 14, wherein the sliding sleeve (3) can be locked with respect to the connecting device (14).

16. The collapsible stroller frame of any preceding claims, wherein the rear carrier part (42) is provided with a handgrip (421) which can be pulled up so as to fold the frame.

## Patentansprüche

1. Zusammenlegbarer Kindersportwagenrahmen, umfassend:
eine vordere Stütze (1), die einen Griffabschnitt (11) und einen Beinabschnitt (12) aufweist, wobei ein unteres Ende des Beinabschnitts (12) mit einer Vorderradgruppe (13) ausgerüstet ist;
eine hintere Stütze (2), die ein an der vorderen Stütze (1) angelenktes oberes Ende und ein mit einer Hinterradgruppe (21) ausgerüstetes unteres Ende aufweist;
eine Gleithülse (3), die an der vorderen Stütze (1) beweglich angebracht ist und eine verriegelte Position besitzt;
einen zusammenklappbaren Träger (4), der einen vorderen Trägerabschnitt (41) und einen hinteren Trägerabschnitt (42), die zwischen dem Beinabschnitt (12) der vorderen Stütze (1) und der hinteren Stütze (2) aneinander angelenkt sind, aufweist; wobei der vordere Trägerabschnitt (41) an der vorderen Stütze (1) angelenkt ist und der hintere Trägerabschnitt (42) an der hinteren Stütze (2) angelenkt ist; und
eine Verbindungsstange (5), die zwischen der Gleithülse (3) und dem zusammenklappbaren Träger (4) verbunden ist,
wobei der Rahmen so beschaffen ist, dass beim Zusammenklappen des Rahmens die zusammenklappbare Träger (4) durch Lösen der Gleithülse (3) von der vorderen Stütze (1) zusammengeklappt wird, so dass die Gleithülse (3) und die Verbindungsstange (5) längs der vorderen Stütze (1) nach unten gleiten, wodurch der vordere Trägerabschnitt (41) und der hintere Trägerabschnitt (42) in eine V-förmige Konfiguration geklappt werden und die vordere Stütze (1) und die hintere Stütze (2) in einer zusammengeklappten Konfiguration eng zusammengezogen sind.

2. Zusammenlegbarer Kindersportwagenrahmen nach Anspruch 1, wobei die Gleithülse (3) mit einer Buchse (33) versehen ist, um einen Sitz zu positionieren, um zu ermöglichen, dass sich der Sitz zusammen mit der Gleithülse beim Zusammenklappen des Rahmens bewegt.

3. Zusammenlegbarer Kindersportwagenrahmen nach Anspruch 1 oder 2, wobei der Griffabschnitt (11) und der Beinabschnitt (12) jeweils einteilig ausgebildet sind.

4. Zusammenlegbarer Kindersportwagenrahmen nach einem der vorangegangenen Ansprüche, der so konfiguriert ist, dass der Griffabschnitt am Beinabschnitt (12) angelenkt ist, so dass er zu dem Beinabschnitt (12) gedreht werden kann, wenn der Rahmen zusammengeklappt wird.

5. Zusammenlegbarer Kindersportwagenrahmen nach einem der Ansprüche 1 bis 3, wobei der Griffabschnitt (11) so konfiguriert ist, dass er durch Gleiten im Beinabschnitt (12) ausziehbar oder einziehbar ist.

6. Zusammenlegbarer Kindersportwagenrahmen nach einem der vorhergehenden Ansprüche, wobei der Griffabschnitt (11) und der Beinabschnitt (12) konfiguriert sind, um eine geschlossene ovalförmige Gestalt zu definieren.

7. Zusammenlegbarer Kindersportwagenrahmen nach einem der vorhergehenden Ansprüche, wobei Enden des vorderen Trägerabschnitts (41) an Enden des hinteren Trägerabschnitts (42) angelenkt sind.

8. Zusammenlegbarer Kindersportwagenrahmen nach Anspruch 7, wobei ein Ende der Verbindungsstange (5) an einem Drehgelenk, das den vorderen Trägerabschnitt (41) mit dem hinteren Trägerabschnitt (42) verbindet, angelenkt ist.

9. Zusammenlegbarer Kindersportwagenrahmen nach Anspruch 7, wobei jedes Ende des vorderen Trägerabschnitts (41) jeweils an einem entsprechenden Ende des hinteren Trägerabschnitts (42) durch eine Schwenkbasis (40), an der ein Ende der einen Verbindungsstange (5) angelenkt ist, angelenkt ist.

10. Zusammenlegbarer Kindersportwagenrahmen nach Anspruch 1, wobei die Gleithülse (3) und die vordere Stütze (1) Mittel aufweisen, um sie aneinander zu verriegeln.

11. Zusammenlegbarer Kindersportwagenrahmen nach Anspruch 10, wobei die Gleithülse (3) ein Positionierungsteil (31) aufweist, das sich hiervon erstreckt.

12. Zusammenlegbarer Kindersportwagenrahmen nach Anspruch 11, wobei der Beinabschnitt (12) einen Positionierungsvorsprung (15) aufweist, an dem das Positionierungsteil (31) verriegelbar ist.

13. Zusammenlegbarer Kindersportwagenrahmen nach einem der Ansprüche 1 bis 10, wobei die Gleithülse (3) ein Positionierungsloch (32) besitzt, das mit einem nachgiebigen Vorsprung (16), der sich von dem Beinabschnitt (12) erstreckt, verriegelbar ist.

14. Zusammenlegbarer Kindersportwagenrahmen nach Anspruch 1, wobei die vordere Stütze (1) eine Verbindungsvorrichtung (14) besitzt, um sie an der hinteren Stütze (2) anzulenken.

15. Zusammenlegbarer Kindersportwagenrahmen nach Anspruch 14, wobei die Gleithülse (3) in Bezug auf die Verbindungsvorrichtung (14) verriegelt werden kann.

16. Zusammenlegbarer Kindersportwagenrahmen nach einem der vorhergehenden Ansprüche, wobei der hintere Trägerabschnitt (42) mit einem Handgriff (421) versehen ist, der nach oben gezogen werden kann, um den Rahmen zusammenzuklappen.

## Revendications

1. Cadre de poussette pliante, comprenant :
un support avant (1) qui inclut une portion formant poignée (11) et une portion formant jambe (12), dans lequel une extrémité inférieure de la portion formant jambe (12) est dotée d'un groupe à roue avant (13) ;
un support arrière (2) ayant une extrémité supérieure montée en pivotement sur le support avant (1) et une extrémité inférieure dotée d'un groupe à roue arrière (21) ;
un manchon coulissant (3) monté mobile sur le support avant (1) et ayant une position bloquée ;
un support repliable (4) incluant une partie porteuse avant (41) et une partie porteuse arrière (42) montées en pivotement l'une par rapport à l'autre entre la portion formant jambe (12) du support avant (1) et le support arrière (2) ; la partie porteuse avant (41) étant reliée en pivotement au support avant (1), et la partie porteuse arrière (42) étant reliée en pivotement au support arrière (2) ; et
une barre de liaison (5), reliée entre le manchon coulissant (3) et le support repliable (4),
le cadre étant agencé de telle façon que lorsqu'on replie le cadre, le support repliable (4) est replié en libérant le manchon coulissant (2) vis-à-vis du support avant (1) de telle sorte que le manchon coulissant (3) et la barre de liaison (5) coulissent vers le bas le long du support avant (1), en pliant ainsi la partie porteuse avant (41) et la partie porteuse arrière (42) sous une configuration en forme de V, et le support avant (1) et le support arrière (2) sont tirés en rapprochement l'un de l'autre dans une configuration repliée.

2. Cadre de poussette pliable selon la revendication 1, dans lequel le manchon coulissant (3) est pourvu d'une embase (33) pour positionner un siège de manière à permettre au siège de se déplacer ensemble avec le manchon coulissant lors du pliage du cadre.

3. Cadre de poussette pliable selon la revendication 1 2, dans lequel la portion forant poignée (11) et la portion formant jambe (12) sont réalisées chacune d'une seule pièce.

4. Cadre de poussette pliante selon l'une quelconque des revendications précédentes, configuré de telle manière que la portion formant poignée est reliée en pivotement à la portion formant jambe (12), de façon à être capable d'être tournée vers la portion formant jambe (12) lors du pliage du cadre.

5. Cadre de poussette pliante selon l'une quelconque des revendications 1 à 3, dans lequel la portion formant poignée (11) est configurée pour être mise en extension ou rétractée par coulissement à l'intérieur de la portion formant jambe (12).

6. Cadre de poussette pliante selon l'une quelconque des revendications précédentes, dans lequel la portion formant poignée (11) et la portion formant jambe (12) sont configurées de manière à définir une forme fermée semblable à un ovale.

7. Cadre de poussette pliante selon l'une quelconque des revendications précédentes, dans lequel les extrémités de la partie porteuse avant (41) sont reliées en pivotement aux extrémités de la partie porteuse arrière (42).

8. Cadre de poussette pliante selon la revendication 7, dans lequel une extrémité de la barre de liaison (5) est reliée en pivotement à un pivot qui interconnecte la partie porteuse avant (41) et la partie porteuse arrière (42).

9. Cadre de poussette pliante selon la revendication 7, dans lequel chaque extrémité de la partie porteuse avant (41) est respectivement reliée en pivotement à une extrémité respective de la partie porteuse arrière (42) par une base pivotante (40) sur laquelle une extrémité de ladite barre de liaison (5) est montée pivotante.

10. Cadre de poussette pliante selon la revendication 1, dans lequel le manchon coulissant (3) et le support avant (1) incluent des moyens pour les bloquer l'un par rapport à l'autre.

11. Cadre de poussette pliante selon la revendication 10, dans lequel le manchon coulissant (3) inclut une pièce de positionnement (31) s'étendant depuis lui-même.

12. Cadre de poussette pliante selon la revendication 11, dans lequel la portion formant jambe (12) inclut une projection de positionnement (15) avec laquelle la pièce de positionnement (31) peut être bloquée.

13. Cadre de poussette pliante selon l'une quelconque des revendications 1 à 10, dans lequel le manchon coulissant (3) comporte un trou de positionnement (32) qui peut être bloqué avec une projection élastique (16) s'étendant depuis la portion formant jambe (12).

14. Cadre de poussette pliante selon la revendication 1, dans lequel le support avant (1) comprend un dispositif de liaison (14) pour le relier en pivotement au support arrière (2).

15. Cadre de poussette pliante selon la revendication 14, dans lequel le manchon coulissant (3) peut être bloqué par rapport au dispositif de liaison (14).

16. Cadre de poussette pliante selon l'une quelconque des revendications précédentes, dans lequel la partie porteuse arrière (42) est dotée d'un élément de préhension manuel (421) qui peut être tiré de manière à replier le cadre.
